# DEMANDE DE BREVET EUROPEEN

(11) **EP 4 599 658 A1**
(43) Date de publication de la demande: **13.08.2025**
(21) Numéro de dépôt: 25155591.8
(22) Date de dépôt: 03.02.2025
(51) Int. Cl.: A01C 17/00

(54) **DISPOSITIF DE DOSAGE DE PARTICULES À ÉPANDRE À BOISSEAU ROTATIF AMÉLIORÉ, ET MACHINE AGRICOLE CORRESPONDANTE**

(30) Priorité: 12.02.2024 FR 2401323
(71) Demandeur: Burel Production, 35220 Chateaubourg (FR)
(72) Inventeur: ARRIBARD, Gwennvel, 22770 Lancieux (FR); LEVEILLE, Lionel, 35500 Vitré (FR); SORIN, Stephane, 35370 Etrelles (FR)
(74) Mandataire: Vidon Brevets & Stratégie

(57) **Abrégé**

Dispositif de dosage de particules à épandre à boisseau rotatif amélioré, et machine agricole correspondante.

L'invention concerne un dispositif de dosage (10) de particules à épandre pour machine agricole, comprenant un fond (11) destiné à former partie inférieure d'une trémie de stockage desdites particules de ladite machine agricole. Le fond (11) comprend une paroi latérale (4) présentant au moins une ouverture (3) destinée au passage des particules à épandre au travers d'au moins un orifice calibré. Une trappe incurvée (2) est mobile en rotation autour d'un axe (12) sensiblement horizontal entre une position d'obturation de l'ouverture et une position de libération maximale de l'ouverture. Un tel axe est disposé à l'extérieur du fond et de la trémie.

Selon l'invention, le dispositif de dosage (10) comprend des moyens d'écartement définissant un espace d'écartement entre ladite paroi latérale (4) et ladite trappe incurvée (2).

## Description

### Domaine technique

Le domaine de l'invention est celui de l'épandage de particules, dans le domaine de l'agriculture, ou de produits se présentant sous la forme de grains, tels que des engrais ou des semences.

Plus précisément, l'invention concerne le dosage des particules à épandre, dans un contexte d'agriculture de précision.

Elle s'applique notamment, mais non exclusivement, aux épandeurs centrifuges qui mettent en oeuvre un ou plusieurs disques mobiles en rotation.

Elle trouve également application dans le domaine des semoirs.

### Art antérieur

Dans de telles machines agricoles, le produit à épandre est généralement stocké dans une trémie, dans la paroi de laquelle est ménagée une ouverture, destinée à l'écoulement de l'engrais ou de la semence.

Ainsi, dans les épandeurs centrifuges, le produit à épandre est déversé depuis la trémie au-dessus de chaque disque, de façon à être projeté par l'intermédiaire des pales sur le terrain sur lequel il doit être déposé. Un exemple de cette approche est décrit dans le document de brevet EP 0 170 605.

Selon les besoins, la quantité de particules délivrées sur un disque par unité de temps peut varier, par exemple d'une proportion de 1 à 400. Une méthode classique pour le calcul des consignes d'épandage repose sur la formule D = QLV / 600, où :
- D est le débit instantané d'alimentation des disques (en kg/min) pour une unité de temps donnée, correspondant à un cycle d'épandage ;
- Q est la dose consigne (en kg/ha), correspondant à la moyenne des consignes Qᵢ requises pour chaque maille présente dans une surface donnée associée à un cycle d'épandage ;
- la surface donnée est un rectangle défini par :
- la largeur L de d'épandage (en m) et
- la distance parcourue pendant un cycle d'épandage : Vxt, où V est la vitesse du tracteur (en km/h), et t la durée d'un cycle d'épandage (en h).

Dans la mesure où la dose consigne Q varie beaucoup pour des raisons agronomiques, où la vitesse V varie beaucoup en fonction du relief, et où la largeur L varie en fonction de la position de la machine agricole dans le champ (notamment en fourrière, en bordure, en bout ou en pointe de champ), il est nécessaire que le débit D puisse varier fortement, et de façon très réactive.

En effet, dans le cadre de l'agriculture de précision, ces variations peuvent être permanentes, ou quasi permanentes. En effet, le système d'épandage connaît sa position précise, par exemple à l'aide d'un positionnement par GPS. Il connaît par ailleurs le besoin en engrais de la zone correspondante, par exemple à partir de cartes élaborées précédemment. En conséquence, en cours d'épandage, sans que l'épandage soit interrompu et sans intervention de l'agriculteur, le système peut décider de modifier la dose de particules délivrées. Selon une autre approche, l'agriculteur peut lui-même contrôler manuellement cette dose, à l'aide de moyens de réglage prévu à cet effet dans la cabine de son tracteur.

Ainsi, dans le domaine de l'épandage comme dans celui des semoirs, il est important de pouvoir réguler le débit d'écoulement gravitaire des particules à épandre au sortir de la trémie, de façon très précise et très réactive sur une grande plage.

Chez la plupart des constructeurs de distributeurs d'engrais, une telle régulation se fait au moyen d'une trappe coulissante disposée au fond de la trémie, comme décrit dans le document EP 1 707 042. Plus précisément, la trémie est équipée, dans sa partie inférieure, d'un réceptacle en plastique ou en inox, également appelé fond doseur (en anglais « hopper bottom »), dans lequel sont ménagées une ou plusieurs ouvertures. Ces ouvertures planes, disposées sur une surface horizontale du fond doseur, peuvent être obturées totalement ou partiellement au moyen d'une trappe coulissante.

Le débit d'écoulement gravitaire des particules à épandre est donc régulé, en fonction de la position de la trappe, et donc de la surface de passage des particules à épandre au travers de l'ouverture.

Cette solution présente l'avantage d'offrir un débit d'écoulement gravitaire maximisé, pour une section d'ouverture donnée du fond doseur. En outre, un tel système de dosage est particulièrement compact.

Elle présente cependant également plusieurs inconvénients.

Tout d'abord, la trappe d'obturation de l'ouverture coulisse entre deux guides dans un environnement chargé en poussières et particules : elle est donc sensible à l'encrassement et risque de se coincer, en fonctionnement.

En outre, la localisation de la trappe, sur la surface horizontale inférieure du fond doseur, rend difficile l'accès à cette dernière, pour procéder à son nettoyage, en cas d'encrassement.

Enfin, cette solution est sensible au chargement de la trémie, du fait de la masse du produit, qui exerce une force gravitaire verticale sur une surface de trappe horizontale : la résultante de force exercée sur la trappe est d'autant plus forte que la masse de produit dans la trémie est élevée.

La solution adoptée à ce jour par le Demandeur de la présente demande de brevet, et décrite dans le document EP 3 692 778, consiste quant à elle à ménager une ouverture (ou plusieurs) dans une paroi latérale du fond, et de l'obturer par une trappe incurvée rotative qui coulisse par rotation autour d'un axe sensiblement horizontal (quand l'épandeur est horizontal), disposé à l'extérieur du fond et de la trémie. La surface cylindrique de la trappe incurvée vient ainsi au contact de la surface cylindrique de la paroi de fond du doseur pour obturer l'ouverture de façon étanche.

Il est important pour le Demandeur d'offrir un dispositif de dosage présentant des performances encore améliorées par rapport au dispositif de dosage de l'art antérieur susmentionné, tout en étant simple, commode et économique tant dans sa fabrication que dans son utilisation.

### Exposé de l'invention

L'invention répond à ce besoin en proposant un dispositif de dosage de particules à épandre pour machine agricole, comprenant un fond destiné à former partie inférieure d'une trémie de stockage desdites particules de ladite machine agricole.

Un tel fond comprend une paroi latérale incurvée présentant au moins une ouverture destinée au passage des particules à épandre de l'intérieur vers l'extérieur de la trémie au travers d'au moins un orifice calibré, une trappe incurvée étant mobile en rotation autour d'un axe sensiblement horizontal, et disposé à l'extérieur du fond et de la trémie, entre une position d'obturation de l'ouverture et une position de libération maximale de l'ouverture.

Selon l'invention, le dispositif de dosage comprend des moyens d'écartement définissant un espace d'écartement entre ladite paroi latérale du fond et ladite trappe incurvée, ledit espace d'écartement comprenant une zone de dégagement.

La mise en oeuvre de tels moyens d'écartement offre de nombreux avantages au dispositif de dosage de la présente invention.

Ils permettent notamment de réduire la surface de contact entre la paroi latérale et la trappe incurvée au voisinage de l'ouverture de passage des particules à épandre, et de créer une zone ou espace de dégagement ou de décompression autour de la zone de contact pour que les poussières et débris notamment qui seraient coincés au niveau de cette zone de contact puissent s'évacuer. Le dispositif est de la sorte quasi auto-nettoyant.

Du fait de la surface de contact restreinte entre la paroi latérale et la trappe incurvée, le mécanisme est très peu sensible au coincement des particules de tailles différentes entre la paroi latérale et la trappe incurvée au voisinage de l'ouverture.

De ce fait, la solution de l'invention permet d'offrir un fonctionnement encore amélioré du dispositif de dosage, en ce sens qu'ils permettent de :
- diminuer les pressions de contact (couples résistants) entre la paroi latérale et la trappe incurvée qui nuisent à l'efficacité du moteur de commande la trappe et/ou qui imposent une puissance du moteur élevée,
- de limiter les frottements, ce qui réduit l'usure de la trappe, et
- réduire les efforts de manoeuvre nécessaires à l'ouverture et la fermeture de la trappe incurvée et le couple nécessaire à la rotation devant être appliqué par le ou les actionneurs (moteurs ou vérins) qui pilotent le passage de la trappe de la position d'obturation à la position de libération maximale et inversement.

De tels moyens d'écartement garantissent en outre une bonne fiabilité de fonctionnement et une bonne étanchéité des pièces du dispositif de dosage.

Le dispositif de dosage selon l'invention est précis, réactif, facile d'entretien, compact, et convient au dosage de tous types de particules à épandre.

Des caractéristiques préférées, simples, commodes et économiques du dispositif de dosage selon l'invention sont présentées ci-après.

Selon une caractéristique avantageuse, lesdits moyens d'écartement présentent une nervure s'étendant sensiblement perpendiculairement depuis ladite paroi latérale au voisinage de ladite ouverture, respectivement ladite trappe incurvée, et dont un bord libre définit au moins une zone de contact avec ladite trappe incurvée, respectivement ladite paroi latérale.

Selon une autre caractéristique avantageuse, le dispositif de dosage comprend un sélecteur de débit amovible formant interface entre ladite ouverture et ladite trappe incurvée, et portant en regard de ladite ouverture au moins un orifice calibré de passage desdites particules à épandre depuis l'intérieur de la trémie, et en ce que lesdits moyens d'écartement sont formés sur ledit sélecteur de débit.

Un tel sélecteur de débit se présente par exemple sous la forme d'une plaque incurvée, en métal ou en plastique, dans laquelle est(sont) ménagé le ou les orifice(s) calibré(s). Cette plaque est positionnée entre l'ouverture ménagée dans la paroi latérale du fond et sa trappe incurvée d'obturation. Elle permet, en fonction de la forme de l'orifice calibré qu'elle porte, de sélectionner une plage de débits d'écoulement possible pour le dispositif de dosage.

Ainsi, on dispose, grâce à un tel dispositif, de deux degrés de liberté pour ajuster le débit d'écoulement des particules à épandre. D'une part, le débit d'écoulement peut être ajusté en fonction de la position de la trappe rotative incurvée, et de son degré d'obturation de l'ouverture ménagée dans le fond. D'autre part, il peut également être ajusté en fonction de la forme de l'orifice calibré que l'on interface entre la trappe rotative et cette ouverture. Par exemple, un sélecteur de débit portant un orifice calibré prenant la forme d'une fine fente verticale est très avantageux à petit débit.

Selon un aspect particulier, lesdits moyens d'écartement présentent une nervure s'étendant sensiblement perpendiculairement depuis ledit sélecteur de débit au voisinage de l'orifice calibré, respectivement ladite trappe incurvée, et dont un bord libre définit au moins une zone de contact avec ladite trappe incurvée, respectivement ledit sélecteur de débit.

Selon un autre aspect particulier, lesdits moyens d'écartement introduisent une distance entre ladite paroi latérale, ou le sélecteur de débit, et ladite trappe incurvée compris entre 1 et 20 mm, préférentiellement entre 2 et 15 mm.

Selon une caractéristique avantageuse, ladite nervure présente au moins une discontinuité.

Selon une autre caractéristique avantageuse, la ou lesdites discontinuités s'étendent en partie inférieure de ladite ouverture ou de l'orifice calibré.

Selon un aspect particulier, au niveau d'au moins une desdites discontinuités, ladite nervure est remplacée par un élément souple.

Selon un autre aspect particulier, au moins une portion de ladite nervure se prolonge, en son bord libre, par un élément souple.

Selon encore un aspect particulier, ladite ou lesdites portions sont formées en partie inférieure de ladite ouverture ou dudit orifice calibré, ladite nervure étant rigide sur les autres parties, notamment en partie supérieure, de ladite ouverture ou dudit orifice calibré.

Selon une caractéristique avantageuse, ledit élément souple appartient au groupe comprenant les brosses et les joints.

L'invention concerne également une machine agricole pour l'épandage ou le semis de particules, comprenant une trémie de stockage des particules, et un dispositif de dosage tel que décrit précédemment, disposé en partie inférieure de ladite trémie.

### Présentation des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
[Fig 1] illustre une machine agricole pour épandre des particules, telles que des engrais ou des semences ;
[Fig 2] illustre une courbe de pilotage de débit souhaitée, selon un mode de réalisation de l'invention ;
[Fig 3] illustre schématiquement la trappe d'obturation incurvée du dispositif de dosage selon un mode de réalisation de l'invention, dans une position d'ouverture réduite adaptée aux petits débits ;
[Fig 4] illustre schématiquement la trappe d'obturation incurvée du dispositif de dosage selon un mode de réalisation de l'invention, dans une position d'ouverture maximum adaptée aux gros débits ;
[Fig 5] illustre une vue d'ensemble en perspective d'un dispositif de dosage selon un mode de réalisation de l'invention ;
[Fig 6] propose une vue éclatée du dispositif de dosage de la [Fig 5] ;
[Fig 7] illustre sous forme schématique synthétique le principe de fonctionnement d'un dispositif de dosage selon un mode de réalisation de l'invention comprenant un sélecteur de débit interfacé entre le fond et la trappe ;
[Fig 8] est une vue de face d'un sélecteur de débit mis en oeuvre dans un mode de réalisation du dispositif de dosage de l'invention et présentant des moyens d'écartement ;
[Fig 9] est une vue de côté du sélecteur de débit de la [Fig 8] ;
[Fig 10] illustre une vue d'ensemble en perspective d'un dispositif de dosage selon un mode de réalisation de l'invention ;
[Fig 11] est une vue de côté du dispositif de dosage de la [Fig 10] ;
[Fig 12] est une vue en perspective d'une brosse destinée à être mise en oeuvre dans un mode de réalisation du dispositif de dosage de l'invention ;
[Fig 13] est une vue de côté du dispositif de dosage de la [Fig 10] comprenant un sélecteur de débit interfacé entre le fond et la trappe incurvée rotative et montrant la trappe obturant partiellement l'orifice calibré ;
[Fig 14] est une vue schématique selon le plan de coupe A-A de la figure 13 ;
[Fig 15] est une vue schématique selon le plan de coupe B-B de la figure 13 ;
[Fig 16] illustre de façon très schématique une variante de réalisation des moyens d'écartement du dispositif de dosage de la [Fig 15] ;
[Fig 17] est une autre variante de réalisation des moyens d'écartement du dispositif de dosage.

### Description détaillée de modes de réalisation de l'invention

Le principe général de l'invention repose sur la mise en oeuvre d'une trappe incurvée, mobile en rotation autour d'un axe horizontal, pour obturer l'ouverture ménagée dans le fond doseur d'un dispositif de dosage de particules à épandre. Une telle trappe incurvée permet de faire varier l'angle de la paroi du fond doseur traversé par les particules à épandre, en fonction de son degré d'ouverture ou d'obturation.

De façon avantageuse, le dispositif de dosage met en oeuvre des moyens d'écartement définissant un espace d'écartement entre ladite paroi latérale et ladite trappe incurvée. Le fait d'écarter la paroi latérale et la trappe incurvée permet notamment de réduire la surface de contact entre ces éléments au voisinage de l'ouverture de passage des particules à épandre, et de créer une zone ou espace de dégagement ou de décompression autour de la zone de contact pour que les poussières et débris notamment qui seraient coincés au niveau de cette zone de contact puissent s'évacuer. Le dispositif est de la sorte quasi auto-nettoyant.

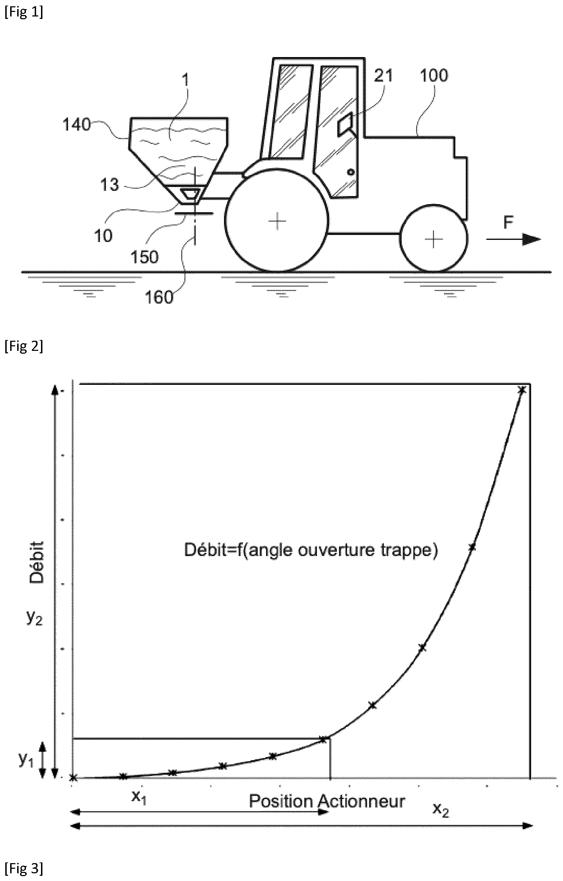

Un tel dispositif de dosage équipe une machine permettant d'épandre de l'engrais solide ou des semis sur une parcelle cultivable, dont un exemple est illustré schématiquement sur la figure 1.

Elle se présente sous la forme d'un tracteur 100 équipé d'une trémie 1 contenant l'engrais ou les graines 140 à épandre.

Le fond de la trémie 1 comprend deux ouvertures, puis deux dispositifs d'alimentation réglables, puis deux dispositifs de réglage de la distribution de l'engrais se présentant par exemple sous la forme de goulottes, laissant passer des particules contenues 140 dans la trémie 1, et placé en surplomb de deux distributeurs comprenant chacun un disque rotatif 150 portant des pales de projection.

Deux dispositifs de dosage 10 équipent le fond de la trémie 1.

Les disques 150 sont le plus souvent disposés dans une position sensiblement horizontale et leur rotation autour d'un axe 160 sensiblement vertical assure la projection du contenu 140 de la trémie par effet centrifuge, sous la forme d'une nappe, en forme générale de croissant, s'étendant à l'arrière de la machine d'épandage.

Un terminal 21, disposé dans la cabine du tracteur 100, permet le pilotage des dispositifs de dosage 10.

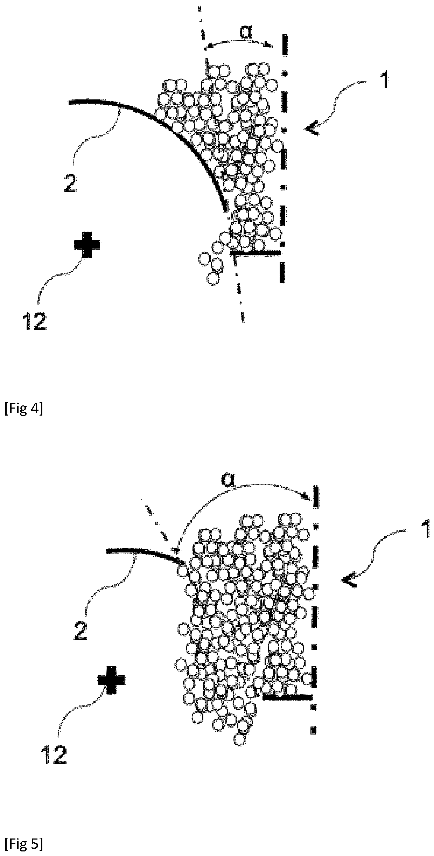

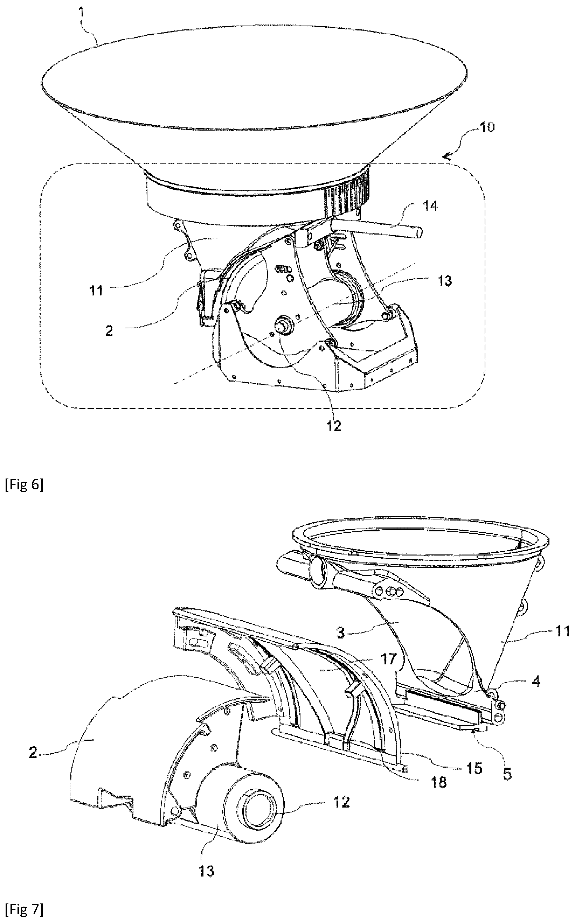

On présente désormais, en relation avec les figures 5 et 6 qui sont des vues d'ensemble en perspective et éclatée respectivement, un dispositif de dosage 10 selon un mode de réalisation de l'invention.

Un tel dispositif de dosage 10 (identifié par les contours en traits pointillés sur la figure 5) comprend un fond 11, qui peut être intégré à la trémie, ou y être solidarisé, par exemple par soudure.

Dans l'exemple de la figure 5, un tel fond 11 présente une section sensiblement circulaire, en forme de bol : il peut être réalisé en matériau plastique, ou se présenter sous forme d'un réceptacle en acier. Il est disposé en partie inférieure de la trémie 1.

Dans la partie inférieure du fond 11, une paroi latérale 4 de ce dernier porte une ouverture 3, par laquelle les particules à épandre peuvent s'écouler de l'intérieur vers l'extérieur de la trémie 1, par exemple pour être déposées sur des disques d'épandage (non représentés).

Cette ouverture 3 peut être obturée au moyen d'une trappe incurvée 2, mobile en rotation autour d'un axe 12. La trappe incurvée 2, dans cet exemple, présente une surface correspondant sensiblement à une portion de cylindre (boisseau). D'autres formes de surfaces de révolution peuvent également être envisagées, par exemple une portion de sphère.

La trappe incurvée 2 de forme convexe pénètre dans le fond 11 qui présente une ouverture 3 correspondante de forme concave.

En outre, dans cet exemple de réalisation des figures 5 et 6, un sélecteur de débit 15 est interfacé entre l'ouverture 3 et la trappe incurvée 2. Ce sélecteur de débit 15 porte un orifice calibré 17 disposé en regard de l'ouverture 3 et au travers duquel passe le produit à épandre, lorsqu'il s'écoule de l'intérieur vers l'extérieur de la trémie 1.

Des moyens de fixation amovible sont prévus pour solidariser le sélecteur de débit 15 au fond 11. Ainsi, dans ce mode de réalisation, le sélecteur de débit 15 peut coulisser en regard de l'ouverture 3, de façon à placer l'orifice calibré 17 approprié à l'utilisation visée par le client en regard de l'ouverture 3 de passage des particules à épandre Il est possible pour l'utilisateur de choisir et d'installer le sélecteur de débit 15 qui correspond au produit qu'il souhaite épandre.

Un actionneur 13 de la trappe incurvée 2 rotative peut permettre de piloter le déplacement de la trappe 2, d'une position d'obturation maximum de l'orifice calibré 17 (et donc de l'ouverture 3), dans laquelle le débit d'écoulement gravitaire du produit à épandre est nul, vers une position de libération maximale de l'orifice calibré 17 (et donc de l'ouverture 3), dans laquelle le débit d'écoulement gravitaire du produit à épandre est maximum.

Un tel actionneur 13 peut prendre la forme d'un moteur, ou d'un vérin.

La trappe incurvée 2, mobile en rotation autour de l'axe 12, et actionnée par un moteur pas à pas dans cet exemple, libère ou obture, totalement ou partiellement, selon sa position, l'orifice calibré 17 (et donc l'ouverture 3).

L'ensemble comprenant la trappe incurvée 2 et l'actionneur 13 est disposé à l'extérieur du fond 11 et peut pivoter par rapport ce dernier, pour libérer l'accès au sélecteur de débit 15, et faciliter son changement.

En outre, un tel ensemble est configuré pour être aisément démontable du dispositif de dosage 1, afin de permettre un nettoyage facile et rapide.

La trappe incurvée 2 et l'actionneur 13 sont disposés à l'extérieur du fond, ce qui améliore leur accessibilité pour le nettoyage et la maintenance.

Un arbre horizontal 14 est disposé dans un logement en partie supérieure du fond 11, et est destiné à porter une dent d'agitation. Un tel arbre 14, optionnel, est par exemple animé d'un mouvement oscillant, et permet d'agiter le produit à épandre, pour en faciliter l'écoulement gravitaire.

Une dent d'agitation (non visible), est destinée à être reliée au bras horizontal d'agitation 14, pour réaliser un mouvement d'agitation oscillant des particules à épandre, en partie inférieure du fond 11.

On notera que par fond, on entend aussi bien un réceptacle ou contenant solidarisé à la trémie dans sa partie inférieure, par exemple par soudure, que la partie inférieure de la trémie elle-même dans une solution intégrée. Un tel fond doseur est également appelé bol (ou en anglais « *happer bottom* »).

On notera également que le sélecteur de débit 15 porte des moyens d'écartement 18 situés au voisinage l'orifice calibré 17 et qui seront décrits plus en détails par la suite.

Le principe d'obturation par trappe incurvée est connu et représenté schématiquement sur les figures 3 et 4.

Sur la figure 3, la trappe incurvée 2 se trouve dans une position d'ouverture réduite. L'angle d'inclinaison α, qui correspond à l'angle d'inclinaison moyen de l'ouverture libérée par la trappe incurvée 2 par rapport à la verticale est faible. Dans cette position, le dispositif de dosage est adapté à un débit d'écoulement faible du produit à épandre. Sur la figure 4, la trappe incurvée 2 se trouve dans une position d'ouverture maximum. L'angle d'inclinaison α, qui correspond à l'angle d'inclinaison moyen de l'ouverture libérée par la trappe incurvée 2 par rapport à la verticale est élevé. Dans cette position, le dispositif de dosage est adapté à un gros débit d'écoulement du produit à épandre. Ceci est rendu possible par le positionnement particulier de la trappe 2, qui est disposée à l'extérieur du fond, mais dont l'axe de rotation est situé à proximité de l'ouverture, sensiblement à la verticale de la frontière haute de l'ouverture.

Ainsi, l'emploi d'une trappe incurvée 2 permet avantageusement :
- de réduire le débit d'écoulement en position d'ouverture minimum de la trappe, par rapport à l'art antérieur ;
- d'augmenter le débit d'écoulement en position d'ouverture maximum de la trappe, par rapport à l'art antérieur ;
- d'accroître la section de passage du produit à épandre pour un encombrement donné, par rapport à une trappe plane ;
- de favoriser un écoulement continu du produit à épandre en petit débit (car la section de l'orifice dégagé par la trappe est suffisante pour un écoulement stable du produit à épandre).

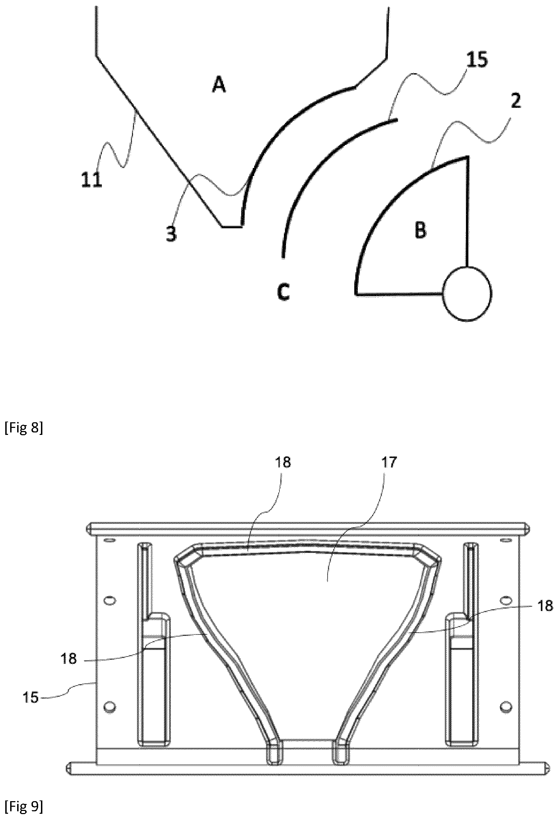

Le principe de fonctionnement d'un tel sélecteur de débit peut être mieux compris au regard de la figure 8 qui illustre sous forme schématique un mode de réalisation de l'invention, dans lequel le dispositif comprend trois éléments principaux, à savoir :
- un premier élément référencé A comprenant le fond 11 dans la paroi latérale duquel est ménagé une ouverture 3 de forme concave ;
- un deuxième élément référencé B comprenant la trappe 2 de forme convexe, mobile en rotation autour d'un moyeu pour venir épouser la forme concave de l'ouverture 3 du fond ;
- un troisième élément référencé C, qui vient s'interfacer entre l'ouverture 3 et la trappe 2, comprenant un sélecteur de débit 15 dans
lequel est ménagé un orifice calibré 17 par lequel s'écoule les particules. Les dispositifs conventionnels, tels que celui décrit dans le document de brevet EP 0 183 292 par exemple, ne comprennent pas ce troisième élément référencé C. Ainsi, le réglage du débit d'écoulement ne s'opère qu'en ajustant la position de la trappe mobile 2, et donc le degré d'obturation de l'ouverture 3 par cette dernière.

La présence, selon un mode de réalisation de l'invention, de cet élément référencé C offre un degré de liberté supplémentaire, qui est particulièrement avantageux pour ajuster plus précisément le débit d'écoulement (et en particulier atteindre de faibles débits d'écoulement), et permettre donc une plus grande polyvalence du dispositif de dosage, en fonction de la forme de cet orifice calibré, en adaptant par exemple la géométrie de cet orifice au type de particules à épandre.

Il est à noter que la mise en oeuvre d'un sélecteur de débit dans le dispositif de dosage l'invention est cependant optionnel.

Dans un autre mode de réalisation non illustré sur les figures, l'orifice calibré est directement formé par l'ouverture 3 ménagée dans la paroi latérale 4 du fond doseur 11.

De façon avantageuse, le dispositif de dosage de l'invention, mettant en oeuvre ou non un sélecteur de débit, comprend des moyens d'écartement définissant un espace d'écartement ou de décompression entre ladite paroi latérale 4 du fond doseur 11 et la trappe incurvée 2.

Dans le mode de réalisation particulier du dispositif de dosage décrit en relation avec les figures 5 à 15 et qui met en oeuvre un sélecteur de débit, les moyens d'écartement sont disposés au voisinage de l'orifice calibré 17 sur le sélecteur de débit 15, et plus précisément sur la face du sélecteur de débit 15 destinée à être orientée du côté de la trappe incurvée 2.

Dans cet exemple de réalisation du dispositif de dosage de l'invention, comme cela est visible sur la Figure 8 notamment, l'orifice calibré 17 du sélecteur de débit 15 par lequel s'écoulent les particules à épandre de l'intérieur vers l'extérieur de la trémie présente une forme sensiblement triangulaire avec une largeur augmentant progressivement du bas (en fond de trémie) vers le haut, la section de passage des particules à épandre au travers de l'orifice calibré augmentant progressivement du bas de l'ouverture vers le haut de cette dernière.

On notera que la largeur s'entend ici comme la dimension horizontale (variation "du bas vers le haut").

En conjuguant le phénomène de modification de l'angle d'inclinaison α sur les figures 3 et 4, obtenu grâce à l'utilisation d'une trappe incurvée rotative, avec cet agrandissement progressif de la section de passage de l'orifice calibré, on obtient une courbe de pilotage du débit d'écoulement gravitaire parabolique telle qu'illustrée en figure 2.

La courbe de la figure 2 illustre l'évolution du débit d'écoulement gravitaire d'un produit à épandre, exprimée en kg/min, en fonction de la position d'un actionneur pilotant le déplacement d'une trappe d'obturation de l'ouverture ménagée dans la paroi latérale d'une trémie 1, pour un mode de réalisation d'une trappe incurvée obturant un orifice calibré de forme sensiblement triangulaire d'un sélecteur de débit.

Sur la figure 2, le débit d'écoulement gravitaire maximum qui peut être obtenu est noté y₂ : il est obtenu pour un déplacement maximum x₂ de l'actionneur pilotant la trappe incurvée rotative. Un débit faible y₁ peut également être obtenu pour un déplacement de l'actionneur x₁ .

On obtient donc une précision accrue en petit débit, et une bonne réactivité en gros débit. L'alliance de ces deux aptitudes offre donc au dispositif de dosage selon ce mode de réalisation de l'invention une forte polyvalence.

Dans l'exemple de réalisation illustré sur les figures 5 à 15, les moyens d'écartement présentent une nervure, ou un rebord, 18 s'étendant sensiblement perpendiculairement depuis le sélecteur de débit 15 (qui est représenté seul sur les figures 8 et 9), et en partie autour de l'orifice calibré 17.

La nervure 18 s'étend autour de l'orifice calibré 17 (c'est-à-dire en sa partie supérieure et sur ses parties latérales) sauf en partie inférieure de ce dernier, et forme un élément de contact avec la trappe incurvée 2 lorsque celle-ci vient obturer au moins en partie l'orifice calibré 17.

La nervure 18 présente donc une discontinuité en partie inférieure.

Dans un exemple de réalisation, la nervure présente plusieurs discontinuités.

Dans un autre exemple de réalisation, la nervure s'étend tout autour de l'orifice calibré.

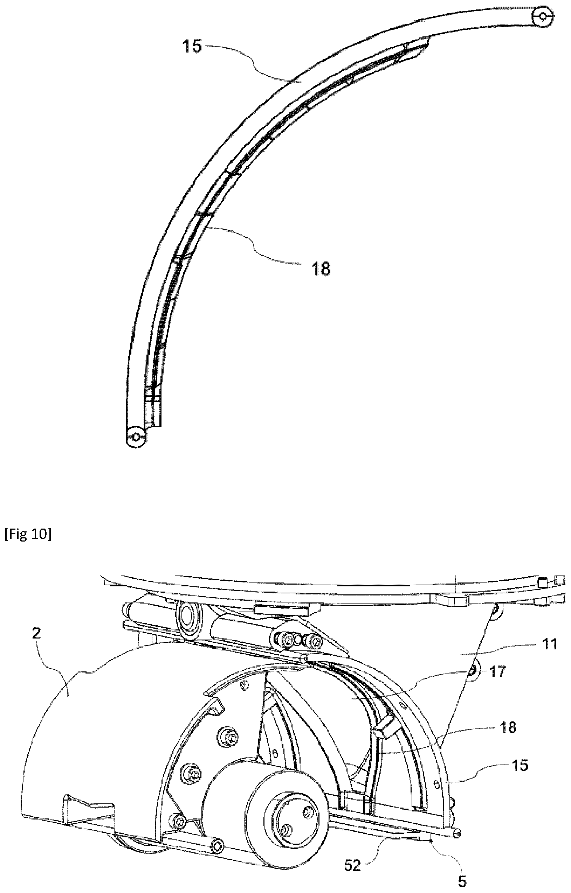

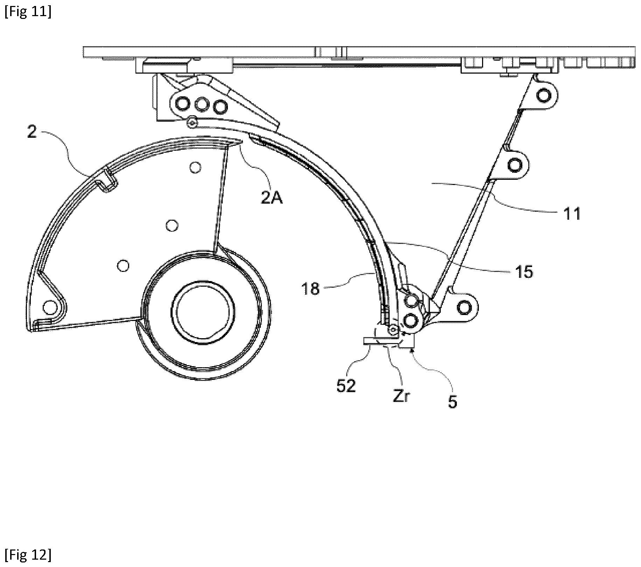

Les figures 10 et 11 montrent le dispositif de dosage comprenant le sélecteur de débit 15 avec la trappe incurvée 2 rotative en position dégagée de l'orifice calibré 17.

On note que, dans cet exemple de réalisation, la paroi 4 dans laquelle est ménagée l'ouverture 3 présente une surface incurvée correspondant sensiblement à la surface de révolution de la trappe incurvée 2 et du sélecteur de débit 15.

Le sélecteur de débit 15 peut être monté mobile en translation ou en rotation devant l'ouverture 3 de passage des particules : le déplacement du sélecteur de débit permet de mettre l'orifice calibré 17 à l'utilisation visée par le client en regard de l'ouverture 3 de passage des particules à épandre.

Le dispositif de dosage comprend des moyens de fixation amovible du sélecteur de débit 15.

On distingue sur ces figures en particulier la géométrie particulière de la nervure 18 qui constitue une partie saillante ou un rebord, et qui s'étend sur la périphérie d'une partie de l'orifice calibré 17.

La surface extérieure de la trappe incurvée 2 vient glisser contre le bord libre de la nervure 18 lorsque la trappe incurvée 2 vient notamment fermer en partie ou totalement l'orifice calibré 17.

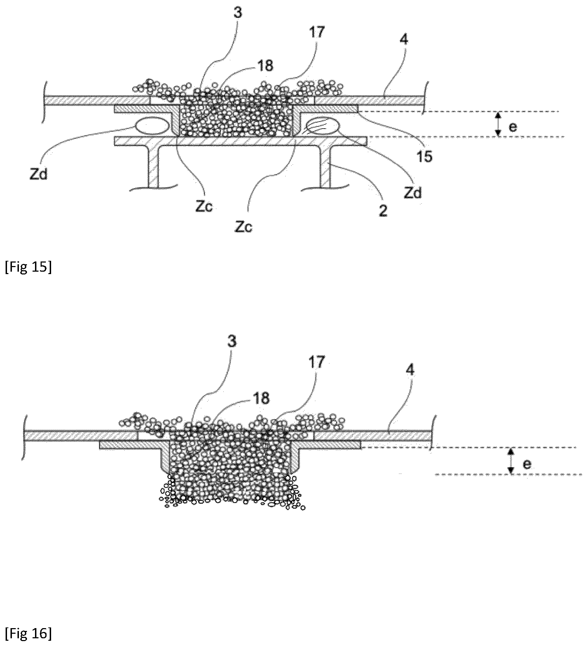

Le bord libre de la nervure 18 définit une zone de contact Zc (représentée sur la figure 15) avec la trappe incurvée 2 qui est linéique dans cet exemple.

Plutôt qu'un contact cylindre sur cylindre de la trappe incurvée avec la paroi de fond du doseur ou le sélecteur de débit comme dans l'art antérieur, il est donc proposé de mettre en oeuvre des moyens d'écartement de dimension réduite créant une surface de contact réduite avec la trappe incurvée.

Le contact restreint d'une surface cylindrique (celle de la trappe incurvée) avec le bord libre de la nervure 18 a pour effet de limiter les couples résistants qui dans l'art antérieur sont induits notamment par les défauts géométriques des deux surfaces cylindriques en contact qui sont supposées coaxiales et dimensionnellement ajustées. Ceci permet de surcroit de créer une zone de dégagement/décompression Zd directement autour de la zone de contact Zc.

Ceci rend le dispositif de l'invention robuste, peu sensible à l'encrassement et quasi auto-nettoyant car les poussières et débris éventuels sont facilement évacués vers cette zone de dégagement/décompression Zd au travers de la zone de contact Zc.

Au niveau de la discontinuité située en partie inférieure de l'orifice calibré 17, la nervure est remplacée par un élément souple dans cet exemple de réalisation. L'élément souple est ici une brosse 5 qui est montée sur le fond 11 de la trémie.

La brosse 5 est illustrée seule sur la figure 12 et présente une forme globale sensiblement en « L » avec une partie de support 51 présentant une rainure longitudinale de fixation de la brosse au fond 11 de la trémie et une partie souple 52 constituée de poils de brosse juxtaposés.

La brosse 5 est visible une fois montée sur le fond 11 de la trémie sur les figures 10 et 11. Elle s'étend à proximité de la partie inférieure de l'orifice calibré 17, en-dessous du bord inférieur du sélecteur de débit 15, sur tout ou partie de la largeur de ce dernier. Les poils de la brosse sont relativement souples mais possèdent toutefois une raideur suffisante leur permettant de rester droits et dans la position sensiblement horizontale dite de retenue illustrée sur les figures 10 et 11 pour stopper les particules lorsque la trappe incurvée 2 est fermée et obture complètement l'orifice calibré.

Le bord avant 2A de la trappe incurvée 2 est destiné à venir au contact de ces poils de brosse en position d'obturation de l'orifice calibré 17. Ces poils de brosse délimitent avec le bord avant 2A un espace de retenue Zr des particules qui s'écoulent au niveau de la partie inférieure de l'orifice calibré 17 (c'est-à-dire au niveau de la discontinuité de la nervure 18), cette partie inférieure constituant un trajet de fuite des particules s'écoulant de la trémie. Cet espace de retenue Zr délimité schématiquement en pointillés sur la figure 12 présente une bonne étanchéité et permet de libérer et collecter les particules qui seraient coincées entre le bord libre de la nervure 18 et la trappe incurvée 2 lors de la fermeture de l'orifice calibré 17 par la trappe incurvée 2. Ceci a pour conséquence de réduire très sensiblement les efforts ou le couple de fermeture de la trappe incurvée 2 devant être appliqué par le ou les actionneurs (moteurs), et donc de pouvoir utiliser des moteurs de taille réduite dans le dispositif de dosage de l'invention.

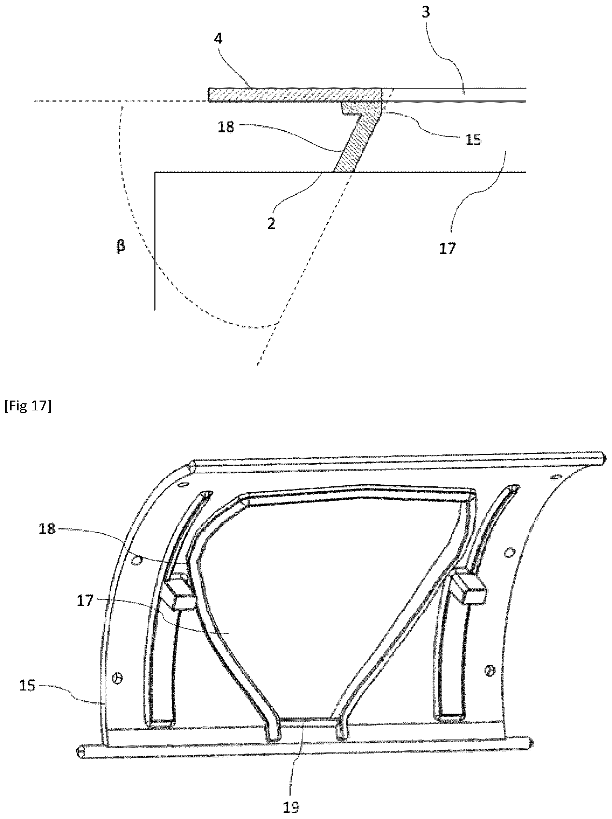

Dans une variante de réalisation, la brosse 5 est montée sur le sélecteur de débit 15. Dans un autre mode de réalisation, au moins une portion de la nervure peut se prolonger, en son bord libre, par un élément souple, tel une brosse ou un joint souple. Dans un exemple de réalisation illustrée sur la figure 17, la nervure 18 est rigide en partie supérieure de l'orifice calibré 17 et sur ses bords latéraux. Un joint 19 souple ou lèvre souple est disposé en partie inférieure de l'orifice calibré 17, les extrémités opposées du joint souple étant en contact avec la nervure 18 de sorte que les moyens d'écartement sont continus. La déformation du joint 19 souple permet notamment de libérer les particules bloquées au niveau de la zone de contact entre la trappe incurvée 2 et la nervure 18 située en partie inférieure de l'orifice calibré 17.

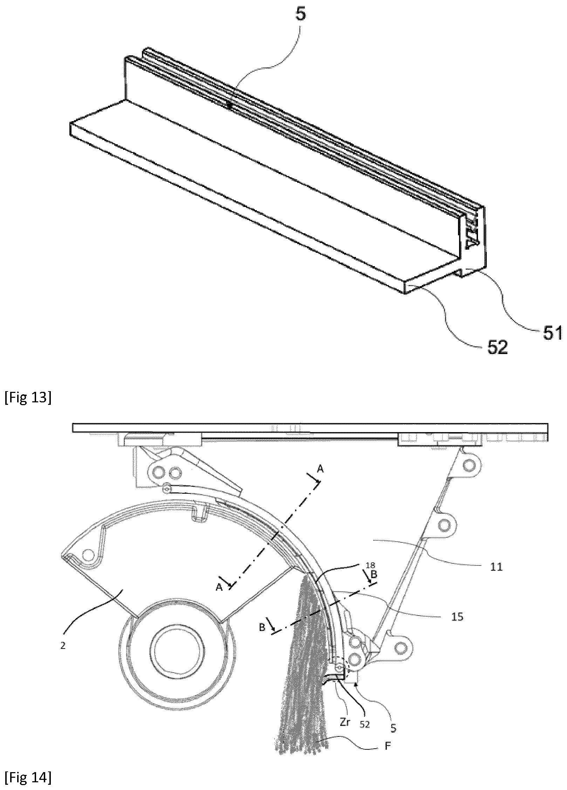

La figure 13 est une vue de côté du dispositif de dosage montrant la trappe incurvée 2 rotative obturant partiellement l'orifice calibré 17. On distingue sur cette figure le flux d'engrais F représenté très schématiquement qui s'écoule depuis le fond 11 au travers de l'orifice calibré 17 partiellement ouvert.

La figure 14 est une vue selon le plan de coupe A-A de la figure 13 illustrant de façon très schématique l'espace d'écartement ménagé entre la paroi latérale 4 du fond doseur 11 située au voisinage de l'ouverture 3 et la trappe incurvée 2. Sur cette figure 14, la trappe incurvée 2 obture l'orifice calibré 17 et empêche donc le passage des particules en dehors de la trémie.

La hauteur de la nervure est référencée « e » sur la figure 14. Elle définit la distance et l'espace d'écartement entre la paroi latérale 4 du fond doseur 11 et la trappe incurvée 2 qui ne sont pas en contact comme dans l'art antérieur.

On observe la surface de contact Zc réduite/mince entre le bord libre de la nervure 18 et la surface de la trappe incurvée 2, qui forme une ligne d'étanchéité. On observe également la zone de décompression Zd situées autour de la nervure 18 dans l'espace d'écartement qui s'étend entre la paroi latérale 4 du fond doseur 11 et la trappe incurvée 2.

On observe dans l'espace d'écartement de hauteur « e », une zone destinée au passage des particules depuis l'orifice calibré 17 de l'ouverture 3 délimitée par la surface de contact Zc, et la zone de dégagement ou de décompression Zd qui est un espace libre ou vide s'étendant autour de la zone de passage des particules et de la surface de contact Zc.

La zone de décompression Zd permet l'évacuation ou le dégagement, de particules, poussières et/ou débris qui peuvent fuir depuis l'orifice calibré 17 à travers la surface de contact Zc. Des traits courbes représentent schématiquement des fuites de poussières. Les dimensions réduites de la surface de contact Zc minimisent le risque de coincement de particules à l'interface du bord libre de la nervure 18 et de la surface de la trappe incurvée 2.

La figure 15 est une vue selon le plan de coupe B-B illustrant le passage des particules depuis l'orifice calibré 17 de l'ouverture 3 le long de la nervure 18.

La nervure 18 s'étend dans cet exemple de réalisation perpendiculairement à la surface du sélecteur de débit 15, et donc à la paroi latérale 4 du fond doseur.

Dans l'exemple de réalisation de la figure 16, la nervure 18 s'étend selon un angle β inférieur à 90° par rapport à la surface du sélecteur de débit 15, et donc à la paroi latérale 4 du fond doseur.

Plus généralement, l'angle β peut être compris entre 80° et 90°, et par exemple égal à 85° +/-0,5°.

Une telle dépouille intégrée à la nervure 18 permet de créer une zone de décompression une fois que les particules qui s'écoulent de la trémie ont passé l'ouverture du fond.

Elle permet en outre de favoriser un écoulement rapide des particules.

Comme souligné précédemment, la mise en oeuvre d'un sélecteur de débit dans le dispositif de dosage de l'invention est cependant optionnelle.

Dans un autre mode de réalisation non illustré sur les figures, l'orifice calibré est directement formé par l'ouverture 3 ménagée dans la paroi latérale 4 du fond doseur 11. Dans ce cas de figure, les moyens d'écartement peuvent être ménagés sur la paroi latérale 4 du fond doseur et prendre la forme d'une nervure telle que décrite précédemment venant au contact de la trappe incurvée.

Dans d'autres modes de réalisation non illustrés sur les figures, les moyens d'écartement peuvent être ménagés sur la paroi de la trappe incurvée et venir au contact d'un sélecteur de débit ou bien de la paroi latérale 4 du fond doseur lorsque le dispositif de dosage ne met pas en oeuvre de sélecteur de débit.

Bien sûr, les caractéristiques spécifiques ou variantes décrites en correspondance avec l'un des modes de réalisation peuvent être adaptées et/ou mises en oeuvre dans un autre mode de réalisation.

Dans les différents modes de réalisation, la nervure peut être rigide ou souple, voire être rigide sauf sur une zone donnée de la nervure où celle-ci est souple. Cette souplesse localisée sur la zone donnée peut être obtenue par exemple en prévoyant une ou plusieurs fentes dans le sens de la hauteur de la nervure, ou bien en prévoyant un matériau plus souple sur le bord libre de la nervure.

Elle peut être fabriquée en matière plastique, en caoutchouc ou en polyuréthane de préférence.

Son bord libre peut par exemple être plat, arrondi ou en forme de pointe.

Les moyens d'écartement introduisent une distance entre ladite paroi latérale 4 du fond doseur, ou le sélecteur de débit 15, et ladite trappe incurvée 2 comprise entre 1 et 20 mm, préférentiellement entre 2 et 15 mm.

Lorsque la nervure est discontinue, elle peut être remplacée par un élément souple au niveau d'au moins une desdites discontinuités.

Ledit élément souple appartient au groupe comprenant les brosses et les joints.

La nervure peut être montée de façon réversible et être aisément remplacée lorsqu'elle est usée.

Un tel dispositif de dosage est précis, réactif, facile d'entretien, compact, et convient au dosage de tous types de particules à épandre, quelle que soit la courbe de débit optimale associée.

Le dispositif de dosage selon ces différents modes de réalisation est ainsi adapté à des types de particules à épandre variés en formes et en dimensions (engrais ou semences de formes sphériques de diamètre 2 à 5 mm ; pellets de formes cylindriques de diamètres de 3 à 6 mm et de longueur de 8 à 15 mm ; microproduits sphériques de diamètre 1mm, de formes et dimensions assimilables à des grains de sable).

La trappe incurvée selon ces différents modes de réalisation présente une surface définissant sensiblement une portion d'une surface de révolution autour de l'axe horizontal. Il peut s'agir d'une portion d'une surface cylindrique ou sphérique.

La paroi latérale selon ces différents modes de réalisation présente, dans une zone portant l'ouverture, une surface complémentaire à la surface de révolution de la trappe. A nouveau, cette surface peut donc être une portion de cylindre ou de sphère.

Le sélecteur de débit selon ces différents modes de réalisation présente une surface complémentaire à la surface de révolution de la trappe. A nouveau, cette surface peut donc être une portion de cylindre ou de sphère.

On peut bien sûr prévoir autant de sélecteurs de débit que nécessaire, en fonction de la gamme de produits à épandre que l'on souhaite utiliser. Les sélecteurs de débit sont ainsi interchangeables et portent chacun un orifice calibré de forme distincte. Ces orifices calibrés peuvent présenter une largeur augmentant progressivement du bas vers le haut de l'orifice. On pourrait également prévoir des orifices calibrés de largeur constante, par exemple pour les petites particules.

Le débit d'écoulement maximum que le dispositif de dosage permet d'atteindre est fonction de la section de cet orifice calibré.

Comme exposé ci-avant, chaque sélecteur de débit 15, et chaque orifice calibré correspondant 17 permet d'atteindre une plage de débits d'écoulement des produits à épandre ; en d'autres termes, chaque sélecteur de débit 15 est associé à une courbe spécifique de débit.

Un sélecteur de débit présentant un orifice calibré de faible section pourra être utilisé pour atteindre de faibles débits d'écoulement de semences par exemple, tandis qu'un sélecteur de débit présentant un orifice calibré de grande section sera avantageux pour l'épandage d'engrais en pellets.

Il est donc important, en fonction du sélecteur de débit 15 que l'utilisateur a monté sur le dispositif de dosage 10, que la machine agricole, et plus particulièrement son calculateur, utilise, pour piloter l'épandage, la courbe de débit adéquate, associée au sélecteur de débit 15 choisi.

Le calculateur de la machine agricole peut mémoriser autant de courbes de débit qu'il existe de sélecteurs de débit 15 disponibles pour le dispositif de dosage 10.

Un même sélecteur de débit 15 peut porter plusieurs orifices calibrés, deux orifices calibrés par exemple.

## Revendications

1. Dispositif (10) de dosage de particules à épandre pour machine agricole, comprenant un fond (11) destiné à former partie inférieure d'une trémie (1) de stockage desdites particules de ladite machine agricole,
ledit fond (11) comprenant une paroi latérale (4) incurvée présentant au moins une ouverture (3) destinée au passage desdites particules à épandre de l'intérieur vers l'extérieur de la trémie (1) au travers d'au moins un orifice calibré (17),
une trappe incurvée (2) étant mobile en rotation autour d'un axe (12) sensiblement horizontal et disposé à l'extérieur dudit fond (11) et de ladite trémie (1), entre une position d'obturation de ladite au moins une ouverture (3) et une position de libération maximale de ladite au moins une ouverture (3),
**caractérisé en ce qu'**il comprend des moyens d'écartement définissant un espace d'écartement entre ladite paroi latérale (4) du fond (11) et ladite trappe incurvée (2), ledit espace d'écartement comprenant une zone de dégagement (Zd).

2. Dispositif de dosage selon la revendication 1, **caractérisé en ce que** lesdits moyens d'écartement présentent une nervure (18) s'étendant sensiblement perpendiculairement depuis ladite paroi latérale (4) au voisinage de ladite ouverture (3), respectivement ladite trappe incurvée (2), et dont un bord libre définit au moins une zone de contact avec ladite trappe incurvée (2), respectivement ladite paroi latérale (4).

3. Dispositif selon la revendication 1, **caractérisé en ce qu'**il comprend un sélecteur de débit (15) amovible formant interface entre ladite ouverture (3) et ladite trappe incurvée (2), et portant en regard de ladite ouverture (3) au moins un orifice calibré (17) de passage desdites particules à épandre depuis l'intérieur de la trémie, et **en ce que** lesdits moyens d'écartement sont formés sur ledit sélecteur de débit (15).

4. Dispositif de dosage selon la revendication 3, **caractérisé en ce que** lesdits moyens d'écartement présentent une nervure (18) s'étendant sensiblement perpendiculairement depuis ledit sélecteur de débit (15) au voisinage de l'orifice calibré (17), respectivement ladite trappe incurvée (2), et dont un bord libre définit au moins une zone de contact avec ladite trappe incurvée (2), respectivement ledit sélecteur de débit (15).

5. Dispositif de dosage selon l'une quelconque des revendications 1 à 4, **caractérisé en ce que** lesdits moyens d'écartement introduisent une distance entre ladite paroi latérale (4) ou le sélecteur de débit (15) et ladite trappe incurvée (2) compris entre 1 et 20 mm, préférentiellement entre 2 et 15 mm.

6. Dispositif de dosage selon la revendication 2, 4 ou 5, **caractérisé en ce que** ladite nervure (18) présente au moins une discontinuité.

7. Dispositif de dosage selon la revendication 6, **caractérisé en ce que** la ou lesdites discontinuités s'étendent en partie inférieure de ladite ouverture (3) ou de l'orifice calibré (17).

8. Dispositif de dosage selon la revendication 6 ou 7, **caractérisé en ce que**, au niveau d'au moins une desdites discontinuités, ladite nervure (18) est remplacée par un élément souple.

9. Dispositif de dosage selon l'une quelconque des revendications 2 à 8, **caractérisé en ce qu'**au moins une portion de ladite nervure (18) se prolonge, en son bord libre, par un élément souple.

10. Dispositif de dosage selon la revendication 9, **caractérisé en ce que** ladite ou lesdites portions sont formées en partie inférieure de ladite ouverture (3) ou dudit orifice calibré (17), ladite nervure (18) étant rigide sur les autres parties, notamment en partie supérieure, de ladite ouverture (3) ou dudit orifice calibré (17).

11. Dispositif de dosage selon l'une quelconque des revendications 8 à 10, **caractérisé en ce que** ledit élément souple appartient au groupe comprenant les brosses et les joints.

12. Machine agricole pour l'épandage ou le semis de particules, comprenant une trémie (1) de stockage desdites particules, **caractérisée en ce qu'**elle comprend un dispositif de dosage (10) selon l'une quelconque des revendications 1 à 11, disposé en partie inférieure de ladite trémie.
